# EUROPÄISCHE PATENTSCHRIFT

(11) **EP 3 329 993 B1**
(45) Veröffentlichungstag und Bekanntmachung des Hinweises auf die Patenterteilung: **08.01.2020**
(21) Anmeldenummer: 17201125.6
(22) Anmeldetag: 10.11.2017
(51) Int. Cl.: G01N 1/38, G01N 1/40, B01L 3/00

(54) **PROBENGEFÄSS ZUR AUFNAHME KLEINVOLUMIGER FLÜSSIGER PROBEN**
SAMPLE VESSEL FOR ACCOMMODATING SMALL VOLUMES OF LIQUID SAMPLES
RÉCIPIENT PORTE-ÉCHANTILLON DESTINÉ À RECEVOIR DES ÉCHANTILLONS LIQUIDES DE PETIT VOLUME

(30) Priorität: 05.12.2016 DE 102016014457
(43) Veröffentlichungstag der Anmeldung: 06.06.2018
(73) Patentinhaber: PVA TePla AG, 35435 Wettenberg (DE)
(72) Erfinder: Beikler, Robert, 80339 München (DE)
(74) Vertreter: Laufhütte, Dieter

(56) Entgegenhaltungen:
- EP-A1- 3 088 904
- WO-A2-2013/167277
- DE-A1- 10 125 126
- DE-C- 859 684
- DE-T5-112008 002 979
- DE-U- 1 734 524
- US-A1- 2006 207 682

## Beschreibung

Die Erfindung betrifft ein Probengefäß zur Aufnahme kleinvolumiger flüssiger Proben sowie Verfahren zur Anwendung des Probengefäßes.

Probengefäße zur Aufnahme kleinvolumiger flüssiger Proben kommen in unterschiedlichen technischen und wissenschaftlichen Bereichen zum Einsatz. Beispielsweise werden in Probenpräparationsmethoden der analytischen Chemie erhaltene flüssige Proben vor der eigentlichen Analyse beispielsweise zur weiteren Konditionierung (Verdünnung), welche zur Vorbereitung für die Messung dient, in Probengefäßen aufbewahrt.

Im Stand der Technik kommen im gegebenen Zusammenhang typischerweise sogenannte Vials in Racks (i.e. Halterungen für Serien) zum Einsatz, die nach Gebrauch vom Anwendungsort entfernt und durch ein neues (oder das gereinigte) Rack ersetzt werden. Derartige Eingriffe sind arbeitsintensiv und bergen hohe Kontaminationsrisiken.

WO 2013/167277 A2 offenbart ein Probengefäß gemäß der Präambel des Anspruchs 1.

Aufgabe der Erfindung ist es, ein Probengefäß bereitzustellen, dass stationär am Anwendungsort verbleiben kann und nach Gebrauch nicht entfernt bzw. gewechselt werden muss. Eine weitere Aufgabe der Erfindung besteht darin, geeignete Verfahren zur Anwendung eines derartigen Probengefäßes vorzuschlagen.

Vor diesem Hintergrund betrifft die Erfindung ein Probengefäß nach Anspruch 1 zur Aufnahme von kleinvolumigen flüssigen Proben, vorzugsweise von durch Gasphasenzersetzung erhaltenen Proben, wobei das Gefäß einen nach oben offenen Aufnahmebereich aufweist, wobei der Aufnahmebereich an seinem tiefsten Punkt eine Ablauföffnung aufweist, die durch einen Aktor mit einer Verschlussfläche reversibel flüssigkeitsdicht verschlossen ist.

Der Aufnahmebereich ist kegelförmig und der tiefste Punkt des Aufnahmebereichs wird durch den Kegelscheitel gebildet. Nach dem Verständnis der vorliegenden Erfindung sind auch Aufnahmebereiche mit gekrümmten Leitkurven als kegelförmig anzusehen. Vorzugsweise handelt es sich aber um einen Kreiskegel mit geraden Leitkurven. Generell sind gerade oder schiefe Kegel denkbar. Der Öffnungswinkel des Kegels kann beispielsweise zwischen 60° und 100°, vorzugsweise zwischen 70° und 90° betragen.

In einer Ausführungsform setzt die Ablauföffnung am Kegelscheitel an und erstreckt sich ausgehend davon lediglich in einer Richtung in den Kegelmantel. Dies führt zu einer asymmetrischen Gestaltung der Ablauföffnung gegenüber dem Kegel, wobei der Kegelscheitel nicht im Zentrum oder innerhalb der Ablauföffnung liegt, sondern wobei die Kante der Ablauföffnung direkt durch den Kegelscheitel verläuft.

Die Ablauföffnung kann beispielsweise rund oder oval sein.

In einer Ausführungsform folgt die Verschlussfläche des Aktors der Kontur des Aufnahmebereichs. Somit weist die Mantelfläche des Aufnahmebereichs bei geschlossener Ablauföffnung keine Unstetigkeit auf.

In einer Ausführungsform handelt es sich bei dem Aktor um einen Stößel, der vorzugsweise parallel zur Achse des Kegels bewegt werden kann, um die Verschlussfläche reversibel aus dem Verlauf des Kegelmantels nach unten zu ziehen und die Abflussöffnung so reversibel freizugeben. Der Stößel kann beispielsweise pneumatisch betrieben werden.

Jenseits der Abflussöffnung kann ein Abflussraum vorhanden sein. Die Abflussöffnung bzw. sofern vorhanden der Abflussraum steht vorzugsweise mit einem Abzug und vorzugsweise einer Pumpe in Verbindung, die an der Abflussöffnung bzw. sofern vorhanden im Abflussraum einen Unterdruck erzeugen kann. So kann Flüssigkeit bei geöffneter Ablauföffnung nach unten abgezogen werden.

Der Aufnahmebereich ist an seiner offenen Oberseite von einem Überlaufbereich umgeben. An der Oberseite des Probengefäßes ist eine Befüll- und Entnahmestation angeordnet, welche Pipetten-Spitzen zum Aufnahmebereich führen kann.

Der Aufnahmebereich kann aus einem Fluorkunststoff gefertigt sein oder mit einem Fluorkunststoff beschichtet sein. Geeignete Fluorkunststoffe umfassen beispielsweise ein PTFE-PPVE-Co-Polymer. Dasselbe gilt für den Aktor bzw. zumindest dessen Verschlussfläche sowie den Überlaufbereich und den Abflussbereich bzw. Abflussraum. Fluorkunststoffe weisen typischerweise eine ausgeprägte chemische Beständigkeit sowie hydrophobe und oleophobe Eigenschaften auf. Beispielsweise kann aber auch vorgesehen sein, dass der Aktor und ggf. auch dessen Verschlussfläche aus PEEK gefertigt sind. In bestimmten Anwendungsbereichen können auch andere Materialien, wie Edelstahl, Keramik, etc., Anwendung finden.

Vor dem eingangs genannten Hintergrund betrifft die Erfindung ferner ein Verfahren nach Anspruch 5 zur Verwendung eines erfindungsgemäßen Probengefäßes, wobei der Aufnahmebereich während einer Leerlaufphase nach Entnahme einer Probe und vor Befüllung mit einer neuen Probe mit einer Substitutionsflüssigkeit gefüllt wird.

In einer Ausführungsform ist vorgesehen, dass der Aufnahmebereich des Probengefäßes während der Leerlaufphase abgedeckt wird.

In einer Ausführungsform ist vorgesehen, dass nach Ablauf eines vorbestimmten Zeitraums und/oder nach Unterschreiten eines vorbestimmten Flüssigkeitsspiegels während der Leerlaufphase zusätzliche Substitutionsflüssigkeit in den Aufnahmebereich nachgefüllt wird.

Während der Leerlaufphase kann die Ablauföffnung geschlossen bleiben.

Die Substitutionsflüssigkeit kann beispielsweise der ggf. verdünnten Trägerflüssigkeit der Proben entsprechen. Sofern es sich bei der Trägerflüssigkeit beispielsweise um eine Säure handelt, wie es in der Gasphasenzersetzung der Fall sein kann, so kann vorgesehen sein, dass die Säurekonzentration in der Spülflüssigkeit geringer ist als in der Trägerflüssigkeit. In einem Anwendungsbeispiel handelt es sich bei der Substitutionsflüssigkeit um verdünnte Flusssäure.

Weiterhin betrifft die Erfindung vor dem eingangs genannten Hintergrund ein Verfahren nach Anspruch 6 zur Verwendung eines erfindungsgemäßen Probengefäßes, wobei nach Entnahme einer Probe wenigstens ein und vorzugsweise mehrere Spülzyklen durchlaufen werden, in denen der Aufnahmebereich mit Spülflüssigkeit gespült wird, wobei in jedem Spülzyklus der Aufnahmebereich bei geschlossener Ablauföffnung wenigstens teilweise mit Spülflüssigkeit gefüllt wird und wobei die Ablauföffnung sodann geöffnet wird, um die Spülflüssigkeit abzulassen. Aber auch ein Spülen in umgekehrter Richtung bei geöffneter Ablauföffnung über den Abflußraum in den Überlaufbereich ist möglich.

Gegebenenfalls kann vorgesehen sein, dass die Spülflüssigkeit bei geöffneter Ablauföffnung aktiv abgesaugt wird.

Mehrere Spülzyklen können vorteilhaft sein, da durch das wiederholte Überstreichen der Wandung mit der Phasengrenze eine Reinigungswirkung erzielt werden kann.

Sofern mehrere Spülzyklen vorgesehen sind, kann für unterschiedliche Spülzyklen eine unterschiedliche starke Befüllung des Aufnahmebereichs vorgesehen sein. Beispielsweise kann in einem finalen Spülzyklus der Aufnahmebereich bis zum Überlauf gefüllt werden. Dies ermöglicht es, an den Wänden des Aufnahmebereichs anhaftende Tropfen zu entfernen.

Bei der Spülflüssigkeit kann es sich beispielsweise um Wasser oder ein anderes Lösungsmittel handeln, das die Basis der Trägerflüssigkeit bilden kann.

In einer Ausführungsform wird der Aufnahmebereich nach Entnahme der Probe und vor Durchlaufen der Spülzyklen bei geschlossener Ablauföffnung wenigstens teilweise mit einer Reinigungsflüssigkeit gefüllt, wobei die Ablauföffnung nach Ablauf eines Reinigungsintervalls geöffnet wird, um die Reinigungsflüssigkeit abzulassen.

Dieser Schritt dient dazu, gegebenenfalls vorhandene Probenrückstände im Aufnahmebereich aufzulösen.

Die Reinigungsflüssigkeit kann beispielsweise der Trägerflüssigkeit der Proben entsprechen. In einem Anwendungsbeispiel kann es sich bei der Reinigungsflüssigkeit um konzentrierte Flusssäure handeln.

Auch betrifft die Erfindung vor dem eingangs genannten Hintergrund ein Verfahren nach Anspruch 8 zur Verwendung eines erfindungsgemäßen Probengefäßes, wobei die Ablauföffnung vor Befüllung des Aufnahmebereichs mit einer Probe bis zum vollständigen Ablauf von Spül- oder Substitutionsflüssigkeit geöffnet wird, und wobei während der Öffnung ein Unterdruck an die Ablauföffnung angelegt wird.

So wird ein restloser Ablauf von Spül- oder Substitutionsflüssigkeit ermöglicht.

In einer Ausführungsform kann vorgesehen sein, dass nach dem Ablauf der Spül- oder Substitutionsflüssigkeit bei leerem Aufnahmebereich die Ablauföffnung wenigstens einmal geschlossen und wieder geöffnet wird, wobei auch während der wiederholten Öffnung ein Unterdruck an die Ablauföffnung angelegt und/oder ein Spülgas in den Aufnahmebereich eingeleitet wird.

So können etwaige im Spaltbereich zwischen Verschluss- und Mantelfläche vorhandene Flüssigkeitsreste restlos entfernt werden.

Zwei oder mehrere der erfindungsgemäßen Verfahren können in Kombination miteinander zur Anwendung kommen, um ein gemeinsames Verfahren zur Handhabung von kleinvolumigen flüssigen Proben zu bilden.

In einer Ausführungsform bilden die erfindungsgemäßen Verfahren einen Teil eines Verfahrens zur Probenanalyse, wobei die flüssigen Proben im Anschluss an eine Analysevorrichtung, wie beispielsweise ein Massenspektrometer oder eine Gaschromatographiesäule, aufgegeben werden. Beispielsweise umfasst das Verfahren zur Probenanalyse eine Gasphasenzersetzung, vorzugsweise zur Konzentrierung von Verunreinigungen auf Substraten wie beispielsweise Siliziumsubstraten.

Es sind aber auch andere Probenpräparationsmethoden in anderen Bereichen mit der Erfindung ausführbar, bei denen die Zwischenspeicherung der Flüssigkeiten zur Aufbereitung und/oder Verarbeitung/Manipulation enthalten ist.

Weitere Einzelheiten und Vorteile der Erfindung ergeben sich aus dem nachfolgend anhand der Figuren beschriebenen Ausführungsbeispiel. In den Figuren zeigen:
- Figur 1:: eine perspektivische Ansicht eines erfindungsgemäßen Probengefäßes;
- Figur 2:: eine Seitenansicht des Probengefäßes gemäß Figur 1;
- Figur 3:: eine Oberansicht des Probengefäßes gemäß Figur 1;
- Figur 4:: eine Schnittansicht des Probengefäßes gemäß Figur 1; und
- Figur 5:: eine schematische Darstellung mehrerer an einem erfindungsgemäßen Probengefäß durchführbarer Verfahrensschritte.

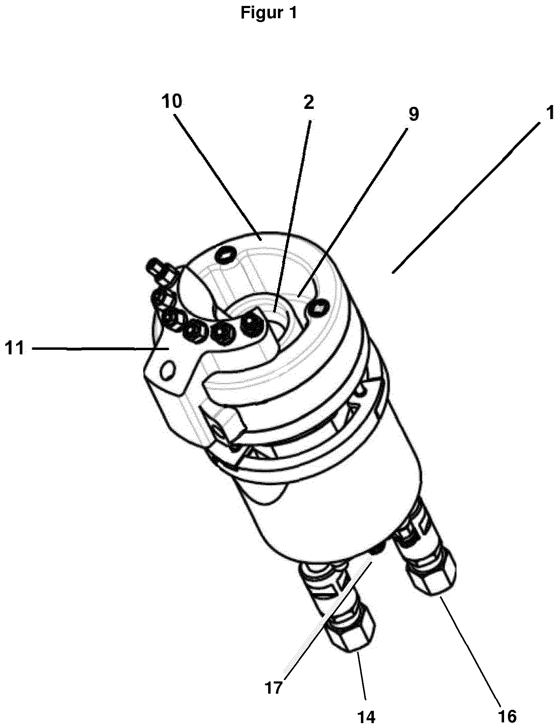

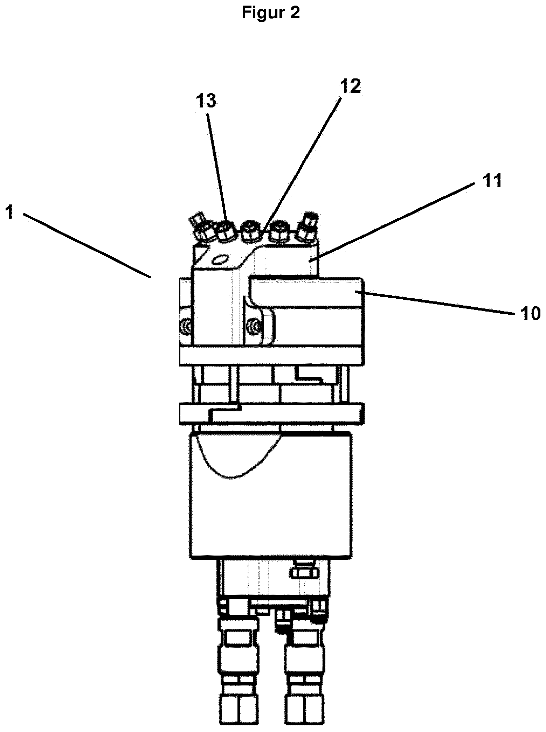

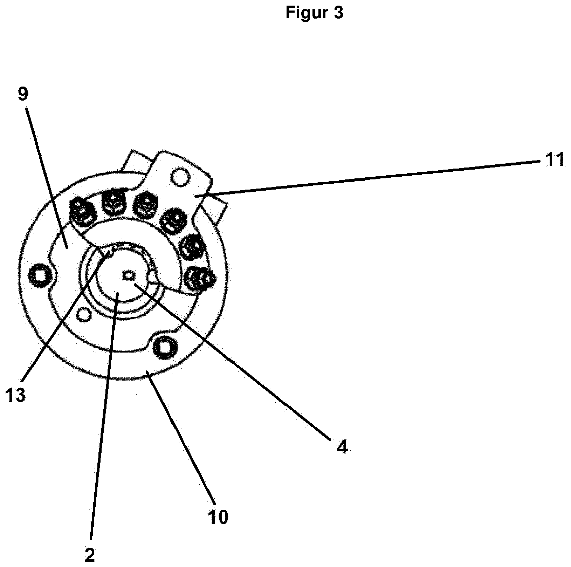

Figuren 1 bis 4 zeigen ein Ausführungsbeispiel eines erfindungsgemäßen Probengefäßes, das allgemein mit dem Bezugszeichen 1 gekennzeichnet ist.

Das Gefäß 1 weist einen nach oben offenen Aufnahmebereich 2 auf. Der Aufnahmebereich 2 hat die Form eines geraden Kreiskegels mit geraden Leitkurven einem Öffnungswinkel von 80° und der tiefste Punkt wird durch den Kegelscheitel 3 gebildet.

An seinem tiefsten Punkt weist der Aufnahmebereich 2 eine ovale Ablauföffnung 4 auft, die durch die Verschlussfläche 5 des Stößels 6 reversibel flüssigkeitsdicht verschlossen werden kann. Der Stößel 6 kann in der Achse des Kegels bewegt werden, um die Verschlussfläche 5 reversibel aus dem Verlauf des Kegelmantels nach unten zu ziehen und die Abflussöffnung 4 so reversibel freizugeben. Er wird pneumatisch betrieben.

Die Verschlussfläche 5 des Stößels 6 folgt der Kontur der Mantelfläche des Kegels, sodass die Mantelfläche bei geschlossener Ablauföffnung 4 keine Unstetigkeit aufweist. Die Ablauföffnung 4 setzt am Kegelscheitel 3 an und erstreckt sich ausgehend davon lediglich in einer Richtung in den Kegelmantel. Dies führt zu einer asymmetrischen Gestaltung der Ablauföffnung 4 gegenüber dem Kegel und der Kegelscheitel 3 liegt nicht im Zentrum oder innerhalb der Ablauföffnung 4, sondern die Kante der Ablauföffnung 4 verläuft direkt durch den Kegelscheitel 3.

Der Aufnahmekegel 2 liegt in der Mittelachse des Probengefäßes 1 , während der Stößel 6 und die Öffnung 4 gegenüber der Mittelachse des Probengefäßes 1 versetzt liegen. Die asymmetrische Lage der Öffnung 4 im Verhältnis zum Kegelscheitel 3 wird also durch einen Versatz des Stößels 6 erreicht.

Jenseits der Abflussöffnung 4 ist ein Abflussraum 7 vorhanden, der über einen Anschluss 14 mit einer Absaugleitung in Verbindung steht, sodass an der Abflussöffnung 4 und im Abflussraum 7 einen Unterdruck erzeugt werden kann.

An der offenen Oberseite ist der Aufnahmebereich 2 umfänglich von einem ringförmigen Überlaufbecken 9 umgeben.

An einem Steg 10 des Probengefäßes, der das Überlaufbecken 9 ringförmig umgibt, ist ferner eine Befüll- und Entnahmestation 11 angeordnet sein, die mehrere Aufnahmen 12 aufweist, um Abblasdüsen 13 zur Tropfenseparation zu halten, die in den Aufnahmebereich 2 ragen oder dahin führen.

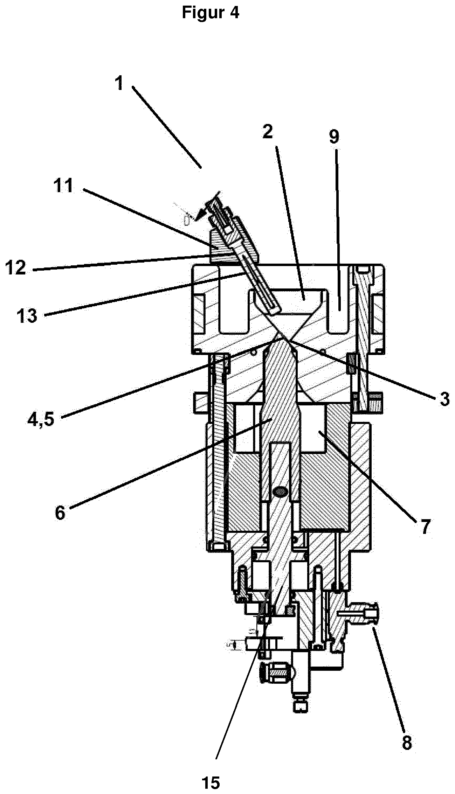

Alle fluidberührenden Teile sind aus einem PTFE-PPVE-Co-Polymer gefertigt. Der in der Figur 4 gezeigte Pneumatikaktor 15 ist aus PEEK gefertigt und verdrehsicher im zugehörigen Zylinder gelagert.

Das dargestellte Probengefäß 1 kann also beispielsweise zur Aufnahme der nach einem Präparations- und Scan-Vorgang anfallenden flüssigen Proben in einem Gasphasenzersetzungsverfahren (VPD) dienen. Die Proben können im Aufnahmekegel 2 verdünnt und dem jeweiligen Messgerät (beispielsweise einem ICP-MS) zugeführt werden. Es kann die typischerweise für derartige Zwecke verwendeten Vial-Racks ersetzen, bleibt aber stationär in der Maschine und muss nicht gewechselt werden, wodurch Personaleingriffe vermieden werden. Die aufwendige und verantwortungsvolle Aufgabe der externen Reinigung der Vials sowie deren Transport entfallen. Weitere Kontaminationsrisiken werden minimiert. Diese Ziele werden durch die spezielle Konstruktion, die verwendeten Materialien, die Versorgung mit entsprechenden Medien und die zugehörigen Prozessmethoden erreicht: Nach dem Vorbild der stationären Versorgungsgefäße kann das stationäre Probengefäß in der Maschine nach jedem Gebrauch gereinigt und vor dem nächsten Gebrauch effektiv getrocknet werden. Darüber hinaus ist es auch für sehr kleine Volumina, wie bei VPD-Proben erforderlich, geeignet.

Die Vorteile der erfindungsgemäßen Vorrichtung liegen dari, dass die Anlage nicht geöffnet werden muß, um die Vials einzusetzen. Hierdurch können keine Verunreinigungen in das gekapselte Gehäuse eindringen. Die Nachweisgrenzen (Limits of Detection) von Verunreinigungen etc. sind daher sehr niedrig.. Systembedingt steht quasi ein unendlicher Vorrat an Vials für die Analyse zur Verfügung. Es kann immer genau die gleiche Reinigungsprozedur durchgeführt werden, so dass weniger Schwankungen in der Analysepräzision in Kauf genommen werden müssen. Die Vorrichtung eignet sich insbesondere für Langzeit- und Remote-Tests.

Unter Verwendung des erfindungsgemäßen Probengefäßes 1 können beispielsweise die folgenden (Teil-)Verfahren durchgeführt werden.

### Leerlaufphase:

Was die erste Gruppe an Verfahren betrifft, so ist in einem Standby-Zustand (Grundzustand bzw. Leerlaufphase) der Aufnahmekegel 2 geschlossen und mit verdünnter VPD-Lösung (beispielsweise verdünnter Flusssäure) gefüllt. Ein unabhängiger Prozess sorgt auch bei längeren Wartezeiten (z.B. > 6h oder bei angehaltenem System) für die Nachfüllung zum Ausgleich der Verdunstung. Damit wird ein Austrocknen verhindert und eine Oberflächenkonditionierung mit VPD-Matrix durchgeführt (Matrixtreue).

### Vor einer Messung:

Sobald eine Proben- oder Blankmessung erfolgen soll, wird der Aufnahmekegel 2 geleert und zur Vermeidung eines Matrixwechsels nicht mit hochreinem Wasser (UPW) gespült. Restflüssigkeitstropfen im Bereich der Ablauföffnung 4 werden über ein über den Anschluss 17 angelegtes Vakuum in einen Raum 7 abgesaugt.

Danach fährt der Stößel 6 erneut nach oben und presst eventuell noch im Spaltbereich zwischen den Kanten der Öffnung 4 und der Verschlussfläche 5 vorhandene kleinste Flüssigkeitsmengen (Größenordnung 1µl) über die Kante der Öffnung 4. Diese werden in einem zweiten und letzten Öffnungs- und Ansaugzyklus entfernt. Diese Vorgänge werden durch Einblasen von Stickstoff in den Aufnahmebereich 2 unterstützt. Der Aufnahmebereich 2 ist nun trocken und für die Probenaufnahme bereit.

### Nach einer Messung:

Nach dem Messvorgang erfolgt eine Reinigung und Erstfüllung (nach einer Messung) mit verdünnter VPD-Lösung zur Konditionierung und zum Schutz der Wände des Aufnahmebereichs 2. Damit ist das Probengefäß 1 wieder im Grundzustand. Ein derartiges Verfahren sollte grundsätzlich nach Eingriffen und unbekannten Zuständen ausgeführt werden um in den Grundzustand zu gelangen. Am Anfang dieses Teilverfahrens wird eine kleine Menge konzentrierte VPD-Lösung (beispielsweise 1%ige Flusssäure) in den unteren Bereich des Aufnahmekegels 2 injiziert, um einen niedrigen pH-Wert zu erreichen. Damit soll ein Ausfällen von im Rückstand gelöster Kontamination verhindert werden sowie eine bessere Auflösung von Rückständen der Probenlösung gewährleistet werden. Nun erfolgen mehrere UPW-Spülzyklen von oben in Drain-Richtung und von unten in Überlaufrichtung. Alternierende Öffnungs- und Schließperioden des Stößels sorgen für ein wiederholtes Überstreichen der Wände des Aufnahmebereichs 2 durch die Phasengrenze der Flüssigkeit. Dies erhöht die Effektivität der Reinigung. Abschließend wird der Aufnahmebereich 2 bis zum Überlauf 9 gefüllt und abgelassen, um restliche an den Wänden anhaftende Tropfen zu entfernen. Im letzten Schritt erfolgt die Befüllung mit verdünnter VPD-Lösung. Die Verdünnung wird hier über den Wasserzulauf zeitgesteuert eingestellt und entspricht somit nicht exakt der Messmatrix. Dieser Anspruch ist an dieser Stelle nicht erforderlich und wurde zugunsten der Gesamtprozesszeit und unter Ersparnis teurer Matrixkomponenten aufgegeben.

### Schutz vor Austrocknung:

Ein weiteres (Teil-)Verfahren kann zeitgesteuert angewendet werden, um Austrocknung zu verhindern. Wird eine bestimmte Zeitspanne ohne Ausführung eiine Nachfüllprozesses überschritten, so wird dieses Verfahren gestartet. Eine Ausnahmeregel tritt in Kraft falls zuletzt der Vorgang zur Vorbereitung für eine Messung ausgeführt wurde und der Aufnahmebereich 2 trocken ist: Wenn in einer einstellbaren Zeit, z.B. 1h, keine Reinigung erfolgt, wird davon ausgegangen, dass das System angehalten wurde. Um die Wände vor Kontamination zu schützen, wird eine Befüllung des Aufnahmebereichs 2 forciert und das Probengefäß 1 ist wieder im Grundzustand (Leerlaufphase). Auch hier gilt, dass die Matrixtreue zugunsten der Gesamtprozesszeit aufgegeben wird.

### Herstellung eines Kalibrierstandards:

Um einen Kalibrierstandard herzustellen, kann der Aufnahmekegel 2 nach den Reinigungsvorgängen wie vor einer Messung mit der (exakten) Messmatrix aufgefüllt werden. Dies erfolgt hinsichtlich Konzentration exakt.

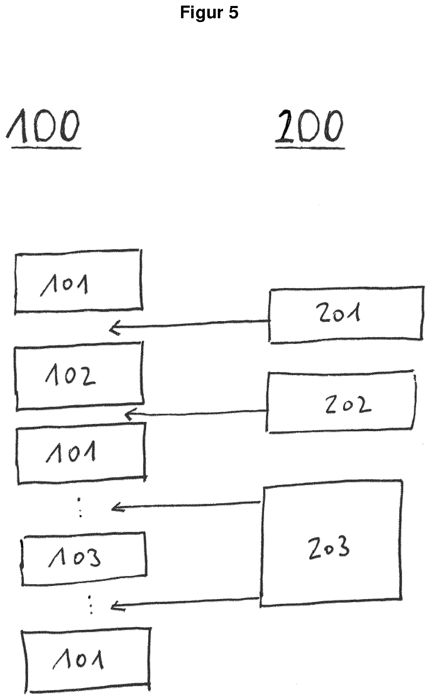

Der Verfahrensablauf lässt sich schematisch in Figur 5 erkennen.

In der Figur sind Zustände des Probengefäßes 1 allgemein mit dem Bezugszeichen 100 gekennzeichnet. Bezugszeichen 101 bezeichnet einen Standby-Zustand, in dem der Aufnahmekegel 2 mit matrixtreuer verdünnter VPD-Lösung oder Probe gefüllt ist, Bezugszeichen 102 einen Zustand mit im Aufnahmebereich 2 befindlicher Probe und Bezugszeichen 103 einen Leerlaufzustand bei mehreren Stunden ohne Nutzung.

(Teil-)Verfahren allgemein mit dem Bezugszeichen 200 gekennzeichnet. Bezugszeichen 201 benennt ein Vorbereitungsschritt gemäß obiger Beschreibung "Vor einer Messung". Bezugszeichen 202 benennt einen Reinigungsschritt nach obiger Beschreibung "Nach einer Messung". Bezugszeichen 203 benennt einen Ablauf gemäß obiger Beschreibung "Schutz vor Austrocknung".

## Patentansprüche

1. Probengefäß (1) zur Aufnahme von kleinvolumigen flüssigen Proben, vorzugsweise von durch Gasphasenzersetzung erhaltenen Proben, wobei das Gefäß (1) einen nach oben offenen Aufnahmebereich (2) aufweist, wobei der Aufnahmebereich (2) kegelförmig ist, der tiefste Punkt des Aufnahmebereichs (2) durch den Kegelscheitel gebildet wird, der Aufnahmebereich (2) an seinem tiefsten Punkt eine Ablauföffnung (4) aufweist, die durch einen Aktor (15) mit einer Verschlussfläche reversibel flüssigkeitsdicht verschlossen ist,
der Aufnahmebereich (2) an seiner offenen Oberseite von einem Überlaufbereich (9) umgeben ist, ein Steg (10), der den Überlaufbereich (9) ringförmig umgibt, und im Bereich der Ablauföffnung (4) über einen Anscluß (17) ein Vakuum anlegbar ist,
**dadurch gekennzeichnet, dass**
an dem Steg (10) ferner eine Befüll- und Entnahmestation (11) angeordnet ist, die mehrere Aufnahmen aufweist, um Abblasdüsen (13) zur Tropfenseparation zu halten, die in den Aufnahmebereich (2) ragen oder dahin führen.

2. Probengefäß (1) nach Anspruch1, **dadurch gekennzeichnet, dass** die Ablauföffnung (4) am Kegelscheitel (3) ansetzt.

3. Probengefäß (1) nach einem der vorhergehenden Ansprüche, **dadurch gekennzeichnet, dass** die Verschlussfläche (5) des Aktors (15) der Kontur des Aufnahmebereichs (2) folgt.

4. Probengefäß (1) nach einem der vorhergehenden Ansprüche, **dadurch gekennzeichnet, dass** es sich bei dem Aktor um einen Stößel (15) handelt, der vorzugsweise in der Achse des Kegels bewegt werden kann, um die Verschlussfläche (5) reversibel aus dem Verlauf des Kegelmantels nach unten zu ziehen und die Ablauföffnung (4) so reversibel freizugeben.

5. Verfahren zur Verwendung eines Probengefäßes (1) nach einem der vorhergehenden Ansprüche 1 bis 4,
wobei
der Aufnahmebereich (2) während einer Leerlaufphase nach Entnahme einer Probe und vor Befüllung mit einer neuen Probe mit einer Substitutionsflüssigkeit gefüllt wird.

6. Verfahren zur Verwendung eines Probengefäßes (1) nach einem der Ansprüche 1 bis 4,
wobei
nach Entnahme einer Probe wenigstens ein und vorzugsweise mehrere Spülzylken durchlaufen werden, in denen der Aufnahmebereich (2) mit Spülflüssigkeit gespült wird, wobei in jedem Spülzyklus der Aufnahmebereich (2) bei geschlossener Ablauföffnung (4) wenigstens teilweise mit Spülflüssigkeit gefüllt wird und wobei die Ablauföffnung (4) sodann geöffnet wird, um die Spülflüssigkeit abzulassen.

7. Verfahren nach Anspruch 6, **dadurch gekennzeichnet, dass** der Aufnahmebereich (2) nach Entnahme der Probe und vor Durchlaufen der Spülzyklen bei geschlossener Ablauföffnung (4) wenigstens teilweise mit einer Reinigungsflüssigkeit gefüllt wird, wobei die Ablauföffnung nach Ablauf eines Reinigungsintervalls geöffnet wird, um die Reinigungsflüssigkeit abzulassen.

8. Verfahren zur Verwendung eines Probengefäßes (1) nach einem der Ansprüche 1 bis 4,
wobei
die Ablauföffnung vor Befüllung des Aufnahmebereichs (2) mit einer Probe bis zum vollständigen Ablauf von Spül- oder Substitutionsflüssigkeit geöffnet wird, wobei während der Öffnung ein Unterdruck an die Ablauföffnung (4) angelegt wird.

## Claims

1. A sample container (1) for receiving small-volume liquid samples, preferably of samples obtained by vapor phase decomposition, wherein the container (1) has an upwardly open receiving region (2), wherein the receiving region (2) is conical, the lowest point of the receiving region (2) is formed by the cone apex, the receiving region (2) has an outflow opening (4) at its lowest point that is reversibly closed in a liquid-tight manner by an actuator (15) having a closure surface, the receiving region (2) is surrounded by an overflow region (9) at its open upper side, a web (10) that surrounds the overflow region (9) in an annular manner and a vacuum can be applied in the region of the outflow opening (4) via a connection (17),
**characterized in that**
a filling and withdrawal station (11) is furthermore arranged at the web (10) having a plurality of receivers to hold expulsion nozzles (13) for drop separation that project into or lead to the receiving region (2).

2. A sample container (1) in accordance with claim 1, **characterized in that** the outflow opening (4) starts at the cone apex (3).

3. A sample container (1) in accordance with one of the preceding claims, **characterized in that** the closure surface (5) of the actuator (15) follows the contour of the receiving region (2).

4. A sample container (1) in accordance with one of the preceding claims, **characterized in that** the actuator is a plunger (15) that can preferably be moved in the axis of the cone to reversibly draw the closure surface (5) from the extent of the surface of the cone downwards and thus to reversibly release the outflow opening (4).

5. A method for using a sample container (1) in accordance with one of the preceding claims 1 to 4, wherein the receiving region (2) is filled with a substitution liquid during an idling phase after a removal of a sample and before a filling with a new sample.

6. A method for using a sample container (1) in accordance with one of the claims 1 to 4, wherein at least one flushing cycle, and preferably a plurality of flushing cycles, is/are run through after a removal of a sample in which the receiving region (2) is flushed with flushing liquid, with the receiving region (2) being at least partly filled with flushing liquid with a closed outflow opening (4) in each flushing cycle and with the outflow opening (4) then being opened to let out the flushing liquid.

7. A method in accordance with claim 6, **characterized in that** the receiving region (2) is at least partly filled with a cleaning liquid after removal of the sample and before running through the flushing cycles with a closed outflow opening (4), with the outflow opening being opened after the elapse of a cleaning interval to let out the cleaning liquid.

8. A method for using a sample container (1) in accordance with one of the claims 1 to 4, wherein the outflow opening is opened up to the complete outflow of flushing or substitution liquid before filling the receiving region (2) with a sample, with a vacuum being applied to the outflow opening (4) during the opening.

## Revendications

1. Récipient pour échantillon (1) destiné à recevoir des échantillons liquides de petit volume, de préférence des échantillons obtenus par décomposition en phase gazeuse, le récipient (1) comportant une zone de réception (2) ouverte vers le haut, la zone de réception (2) étant conique, le point le plus profond de la zone de réception (2) étant formé par le sommet du cône, la zone de réception (2) comportant, en son point le plus profond, un orifice d'écoulement (4), qui est fermé de manière étanche aux liquides et réversible par un actionneur (15) doté d'une surface de fermeture,
la zone de réception (2) étant entourée, sur son côté supérieur ouvert, par une zone de débordement (9), une nervure (10), qui entoure la zone de débordement (9) de manière annulaire, et un vide pouvant être appliqué dans la zone de l'orifice d'écoulement (4) par le biais d'un raccordement (17),
**caractérisé en ce que**,
une station de remplissage et de prélèvement (11) est en outre disposée sur la nervure (10), ladite station de remplissage et de prélèvement comportant plusieurs logements pour maintenir des buses à souffler (13) pour la séparation des gouttes, qui dépassent dans la zone de réception (2) ou qui y conduisent.

2. Récipient pour échantillon (1) selon la revendication 1, **caractérisé en ce que** l'orifice d'écoulement (4) part du sommet du cône (3).

3. Récipient pour échantillon (1) selon l'une des revendications précédentes, **caractérisé en ce que** la surface de fermeture (5) de l'actionneur (15) suit le contour de la zone de réception (2).

4. Récipient pour échantillon (1) selon l'une des revendications précédentes, **caractérisé en ce que** l'actionneur est une tige de commande (15), qui peut de préférence être déplacée dans l'axe du cône pour tirer vers le bas de manière réversible la surface de fermeture (5) hors du tracé de l'aire latérale du cône et libérer ainsi l'orifice d'écoulement (4) de manière réversible.

5. Procédé d'utilisation d'un récipient pour échantillon (1) selon l'une des revendications précédentes 1 à 4,
dans lequel
la zone de réception (2) est remplie d'un liquide de substitution pendant une phase de marche à vide après le prélèvement d'un échantillon et avant le remplissage avec un nouvel échantillon.

6. Procédé d'utilisation d'un récipient pour échantillon (1) selon l'une des revendications 1 à 4,
dans lequel
après le prélèvement d'un échantillon, au moins un et de préférence plusieurs cycles de rinçage sont effectués, dans lesquels la zone de réception (2) est rincée avec du liquide de rinçage, la zone de réception (2) étant remplie au moins partiellement de liquide de rinçage à chaque cycle de rinçage avec l'orifice d'écoulement (4) fermé et l'orifice d'écoulement (4) étant ensuite ouvert pour évacuer le liquide de rinçage.

7. Procédé selon la revendication 6, **caractérisé en ce que** la zone de réception (2) est, après le prélèvement de l'échantillon et avant le déroulement des cycles de rinçage, remplie au moins partiellement d'un liquide de nettoyage avec l'orifice d'écoulement (4) fermé, l'orifice d'écoulement étant ouvert après l'écoulement d'un intervalle de nettoyage pour évacuer le liquide de nettoyage.

8. Procédé d'utilisation d'un récipient pour échantillon (1) selon l'une des revendications 1 à 4,
dans lequel
l'orifice d'écoulement est, avant le remplissage de la zone de réception (2) avec un échantillon, ouvert jusqu'à écoulement complet du liquide de rinçage ou de substitution, une dépression étant appliquée à l'orifice d'écoulement (4) pendant l'ouverture.
